# EUROPÄISCHE PATENTANMELDUNG

(11) **EP 1 031 490 A1**
(43) Veröffentlichungstag der Anmeldung: **30.08.2000**
(21) Anmeldenummer: 00102757.2
(22) Anmeldetag: 10.02.2000
(51) Int. Cl.: B62B 7/14

(54) **Dreirädriger Schiebewagen für Kinder und/oder Puppen**

(30) Priorität: 23.02.1999 DE 29903241 U
(71) Anmelder: Trends for Kids Vertriebs Gmbh, 84030 Ergolding (DE)
(72) Erfinder: Beger, Udo, 84030 Ergolding (DE)
(74) Vertreter: Eichstädt, Alfred, Dipl.-Ing.

(57) **Zusammenfassung**

Die Erfindung betrifft einen dreirädigen Schiebewagen für Kinder und/oder Puppen. Er weist ein Wagengestell mit mindestens zwei im wesentlichen parallel von vorn nach hinten verlaufenden Schrägholmen auf. Zwischen den Schrägholmen ist ein Sitzelement vorgesehen, welches mindestens einen Sitzteil und einen Rückenlehnenteil aufweist. Weiterhin weist das Wagengestell Befestigungseinrichtungen für die Fixierung und/oder Lagerelemente zum Aufsetzen eines Liegebehältnisses für Kleinkinder auf, wobei das Liegebehältnis Befestigungsmittel zum Fixieren desselben an den Befestigungseinrichtungen und/oder den Schrägholmen enthält.

## Beschreibung

Die Erfindung betrifft einen dreirädrigen Schiebewagen für Kinder oder Puppen mit den im Oberbegriff des Anspruchs 1 angegebenen Merkmalen.

Derartige Schiebewagen sind als Kindersportwagen unter der Bezeichnung 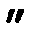 Jogger" bekannt. Das Sitzelement ist in der Regel aus einem textilen Werkstoff hergestellt und durch Wattierungen und Einlagen mindestens im Sitz- und Rückenbereich versteift. Die Anbindung eines so gebildeten Sitzelementes, das darüber hinaus auch ein Lordosenstützteil aufweisen kann, an dem sich das Rückenlehnenteil anschließt, an den Schrägholmen erfolgt über seitliche textile Wände, die die einzelnen Teile über seitliche Textilwände miteinander verbinden und die um die Holme mindestens halbseitig umgeschlagen und daran befestigt werden. Zur einfachen lösbaren Befestigung sind hierfür Druckknopfelemente vorgesehen, wobei die Druckknopfgegenelemente an den Außenseiten der Schrägholme befestigt sind. Hierdurch ist es zum einen möglich, das Wagengestell gesondert herzustellen, zu verpacken und erst nachträglich mit dem Sitzeinsatz bzw. dem Sitzelement zu versehen. Anstelle dieses aus textilem Material bestehenden Sitzelementes können selbstverständlich auch Sitzelemente in starrer Ausführung eingebaut sein. Die Erfindung ist auf jede dieser Ausführungsformen anwendbar.

Darüber hinaus ist es bekannt, die Rückenlehne durch Verlängerung der textilen Seitenwände in ihrer Schräglage gegenüber den Schrägholmen zu verändern.

Ein Schiebewagen der gattungsgemäßen Art ist aus der US-5,765,856 bekannt. Der in dieser Druckschrift gezeigte Schiebekinderwagen weist geteilte Längsholme auf, die nach Entriegeln von Sicherungsstreben gegeneinander verschwenkbar sind, und zwar in Richtung der Stützstreben, an denen die Hinterräder gelagert sind. Der Schiebewagen weist lediglich einen Sitz auf.

Ein anderer dreirädriger Schiebewagen ist aus der US-5,123,670 bekannt, bei dem die Schrägholme an einem Basisträger befestigt sind, der vorne als Gabel und hinten als breiter Träger für eine Achse, auf der die hinteren Räder gelagert sind, ausgebildet ist. An den Schrägholmen ist ein Sitzelement befestigt.

Ein ähnlicher Schiebewagen ist aus der US-5,029,897 bekannt, bei dem der Sitzteil des Sitzelementes durch stufenförmig abgesetzte Schrägholme gebildet ist. An dem Untergestell sind die Stützholme vorgesehen, die an den Schrägholmen befestigt sind. Durch Gelenkausbildungen kann der Sitz zusammengelegt werden.

Ein gattungsgemäßer Schiebewagen ist weiterhin aus der US-5,765,855 bekannt, bei dem die Gabel an einem horizontalen Basisträger vorgesehen ist, an dessem hinteren Ende an einer Querstrebe die Lager für die hinteren Räder vorgesehen sind. Ferner sind die Stützstreben an der hinteren Querstrebe befestigt. Die Verlängerungen der Schrägholme sind an der Gabel befestigt. Sowohl an den Verlängerungen der Schrägholme als auch an den Stützstreben ist der Rahmen eines Einsatzkorbes befestigt, oberhalb dessen sich ein Sitz befindet.

Aufgabe der Erfindung ist es, einen Schiebewagen der gattungsgemäßen Art so weiterzubilden, daß sein Nutzen erhöht wird und er auch als Kinderwagen mit einem Liegebehältnis verwendet werden kann und darüber hinaus sichergestellt ist, daß das Liegebehältnis für Kinder nicht aus dem Schiebewagengestell herausfallen kann. Das Prinzip soll gleichermaßen auch auf einen entsprechend ausgebildeten kleineren Puppenwagen anwendbar sein.

Diese Aufgabe wird durch einen Schiebewagen mit den im Anspruch 1 angegebenen Merkmalen gelöst.

Vorteilhafte Weiterbildungen der Erfindung und vorteilhafte Ausgestaltungsformen sind in den Unteransprüchen im einzelnen angegeben.

Durch die Erfindung ist gewährleistet, daß der für den Zweck eines Kinderwagens nicht gedachte dreirädrige Schiebewagen für sitzende Kinder auch in einer weiteren Funktion als Kinderwagen genutzt werden kann. Zu diesem Zweck ist es lediglich erforderlich, entsprechende Befestigungseinrichtungen an den Schrägholmen vorzusehen, um eine gesicherte Fixierung des Liegebehältnisses zu ermöglichen. Dies kann bei einem stabilen Kinderwageneinsatz bzw. einem Liegebehältnis auch dadurch geschehen, daß dieser selbst an den Schrägholmen befestigt ist, beispielsweise durch Rastverbindungen mittels vorstehender Bolzen und Lagerungsausnehmungen, die als Rastlager ausgebildet sind, oder aber auch dadurch, daß die Rückenlehne als Auflagefläche für einen Teil des Liegebehältnisses benutzt wird.

Während die Ansprüche 1 bis 16 Umwandlungsmöglichkeiten unter Einbeziehung des zwischen den Schrägholmen vorhandenen Sitzelementes für die Befestigung und Lagerung des Liegebehältnisses angeben, ist in den Ansprüchen 17 bis 29 eine Ausführungsform angegeben, bei der das Liegebehältnis an vorgesehenen Querstreben befestigt wird, welche vorzugsweise lösbar an den Stützstreben vorgesehen sind. Diese Ausbildungsform ist vorgesehen, um das Liegebehältnis gegenüber der normalerweise vorgesehenen Sitzhöhe höher anordnen zu können, aber auch um das Schiebewagengestell als alleiniges Kinderwagengestell bzw. Puppenwagengestell nutzen zu können, ohne daß das Sitzelement vorhanden sein muß. In weiterer Ausgestaltung dieser Ausführungsform ist vorgesehen, daß die angegebenen Querholme lösbar an den Schrägholmen und den Stützstreben befestigt sind, beispielsweise über federbelastete Rastklemmelemente, die mit ihren federnden Schenkeln mindestens über die Hälfte des Querschnittes der entsprechenden Holme bzw. Streben greifen. Dies hat den Vorteil, daß die Streben im Bedarfsfall einfach aufzurasten sind. Um ein Verrutschen gegeneinander zu vermeiden und ein einfaches Abziehen bei aufgestelltem Gestell zu verhindern, können die beiden Querholme über Kopplungselemente, wie Bänder oder Ketten, miteinander verbunden sein. Auf die so befestigten Querholme ist sodann das Liegebehältnis aufsetzbar und mit an der Unterseite des Bodens vorstehende Befestigungseinrichtungen, wie Schraubschellen oder auf schiebbare Schellenfedern, befestigbar. Sind die Stützstreben schwenkbeweglich an den Schrägholmen angelenkt, um die an ihnen befestigten hinteren Räder beim Lösen der gesicherten Verbindung zum Zwecke des Zusammenlegens des Gestells in Richtung des Vorderrades zu verschwenken, wären die Querholme hinderlich und würden ein Zusammenklappen nur teilweise gestatten. Die Lösung nach Anspruch 18 sieht deshalb vor, daß die Streben lösbar und somit leicht abnehmbar sind, damit diese Bewegung ungehindert ausgeführt werden kann. Dies ist auch erforderlich, um den Schiebewagen wieder mit Sitzelement als Sportwagen nutzen zu können.

Die Befestigung der Querholme zwischen den Schrägholmen bzw. den Stützstreben erfolgt zweckmäßigerweise mittels Schraubverbindungen oder unter Verwendung von Aufrastelementen, wie sie in den Unteransprüchen im einzelnen angegeben sind. Es ist dabei auch eine Kombination mit einem ortsfesten Querholm möglich. Weiterhin sind Befestigungseinrichtungen an der Unterseite des Liegebehältnisses angegeben, um dieses lösbar an den Querholmen befestigen zu können. Um ein Verrutschen der aufgesteckten Querholme an den Längsholmen zu vermeiden, ist es sinnvoll, die Aufsetzhöhe unmittelbar über einen Druckknopfansatz vorzusehen, so daß die Unterkante des Aufrastelementes auf die Oberkante des Druckknopfelementes aufgreift. Hierdurch ist ein Verrutschen nach unten praktisch unmöglich. Über eine Bandkopplung der hinteren Querstrebe an die vordere wird dabei verhindert, daß diese bei aufgestellten Stützstreben auf diesen nach unten wandern kann, so daß ohne weitere Sicherungsmittel eine effiziente und einfache Verbindungslösung gegeben ist, die mit dem Liegebehältnis koppelbar ist.

Die Erfindung wird nachfolgend anhand der in den Zeichnungen dargestellten Ausführungsbeispiele ergänzend erläutert. In den Zeichnungen zeigen:
- FIG 1: einen Schiebewagen gemäß der Erfindung in fotoperspektivischer Darstellung mit darüber eingezeichnetem Liegebehältnis, das in den Schiebewagen einzusetzen ist;
- FIG 2: eine Befestigung des Liegebehältnisses an den Schrägholmen;
- FIG 3: eine Variante der Befestigung eines Liegebehältnisses an den Schrägholmen; und
- FIG 4: eine Befestigung des Liegebehältnisses an zwei Querholmen, die mittels Aufrastelementen auf die Schrägholme und die Stützstreben aufgeklippt sind.

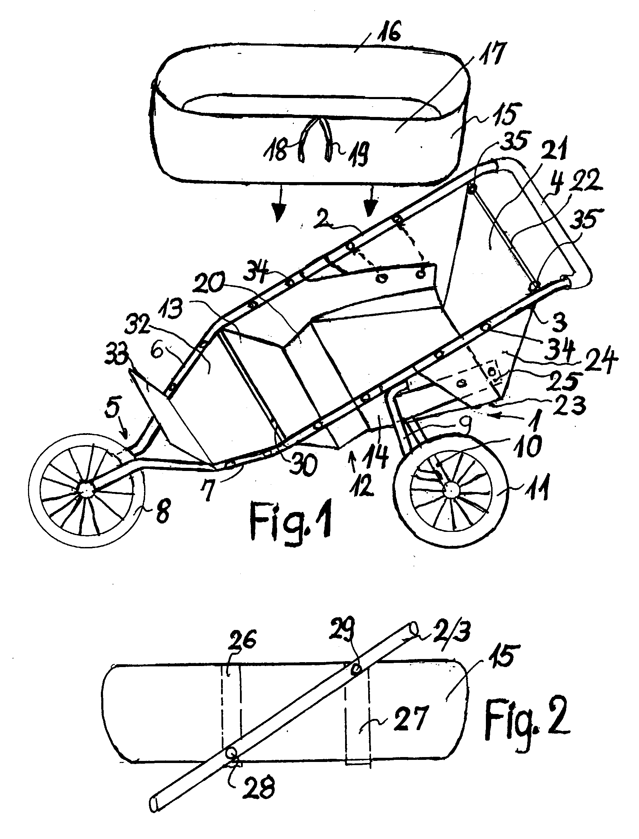

In Fig. 1 ist in perspektivischer Darstellung vereinfacht ein Schiebewagen nach der Erfindung dargestellt, der ein Wagengestell 1 mit einem darin eingesetzten Sitzelement 12 aufweist, auf das später näher eingegangen wird. Über diesem Schiebewagen ist ein Liegebehältnis 15, z.B. eine Babytragetasche, die durch Entfernen des Versteifungsbodens und ggf. vorgesehener Versteifungselemente in den Seitenwänden beispielsweise auch in einen Schlafsack für Kleinkinder umwandelbar ist und damit auch in der Multifunktionalität sowohl als Liegebehältnis nutzbar als auch als wärmender Fußsack in das Sitzelement 12 einsetzbar ist. Der Schiebewagen weist, wie die Darstellung ferner zeigt, zwei Schrägholme 2 und 3 auf, die an ihren oberen hinteren Enden über einen Schiebebügel 4 miteinander verbunden sind und deren untere Enden in Verlängerungen 6 und 7 übergehen, die einen im wesentlichen V-förmigen Verlauf aufweisen und zu einer Gabel 5 zusammengeführt sind, in die das vordere Rad 8 eingesetzt ist. Die hinteren Räder 11 sind an Lagervorrichtungen 10 seitlich am Wagengestell 11 vorstehend drehbar aufgesteckt. Die Lagervorrichtungen werden durch eine Verbindungsachse gebildet, die über Stützstreben 9 an den Längsholmen 2 und 3 befestigt ist. Diese Stützstreben 9 können schwenkbeweglich und arretierbar an den Schrägholmen 2, 3 befestigt sein. Die Fig. 1 zeigt ferner einen Sitzeinsatz 12, der vorzugsweise aus textilem Material besteht und mit entsprechenden Versteifungen in dem Sitzteil 13 und ggf. auch im Lordosestützteil 20 und in dem Rückenteil 14 versehen ist. Diese Teile werden durch textile Seitenwände zusammengehalten, die zugleich zur Befestigung an den Schrägholmen 2 und 3 dienen. Die Befestigung selbst erfolgt über Druckknopfelemente 34, die verschiedene Ausführungsformen aufweisen können. Die seitlichen textilen Wände des Rückenteils 14 sind als seitliche Abhänger 25 ausgebildet, so daß die Rückenlehne 14 in verschiedene Schrägstellungen beim Sitzen verbracht werden kann. Zwischen dem Sitzteil 13 und der unten vorstehenden Fußraste 33 ist eine Bespannung 32 vorgesehen, die ebenfalls mittels Druckknopfverbinder an den beiden Verlängerungen 6 und 7 befestigt ist. Das gesamte Sitzelement 12 kann nach Lösen der Druckknopfverbindungen 34 herausgenommen bzw. nachträglich in ein Wagengestell 1 eingesetzt werden.

Gemäß der Erfindung ist nun in dieser Ausführung ein textiler Abhänger vorgesehen, der z.B. aus einer in Verlängerung 21 zum Rückenlehnenteil 14 angeordneten Stoffbahn besteht, die mittels Ösen 35 an einer Querstrebe 22 im Bereich der oberen Enden der Schrägholme 2 und 3 befestigt ist und die einen abgewinkelten Abnäherteil 23 aufweist, der durch die Seitenwände 24 gewissermaßen eine taschenförmige Auflage für den Rückenlehnenteil 14 bildet. Die Wände 24 werden ebenfalls, wie die anderen textilen Verbindungswände, zum Gebrauchszweck an den Schrägholmen 2 und 3 mittels Druckknopfverbinder 34 befestigt. Zweckmäßigerweise können hier die normalerweise für die seitlichen Abhänger 25 vorgesehenen Druckknopfgegenelemente an den Abnähern mit verwendet werden, zu welchem Zweck die Druck-knöpfe an den textilen Wänden 24 des Abhängers im gleichen Abstand angeordnet sind. Die Wände 24, verbunden mit der die Verlängerung bildenden textilen Wand 21, haben zudem den Vorteil, daß sie den Aufnahmebereich des abgesenkten Rückenlehnenteils 14 schützend umgeben. Das gebildete offene Dreieck zwischen abgeklapptem Rückenlehnenteil 14 und den Schrägholmen wird dadurch verschlossen. Es ist ersichtlich, daß auf das im wesentlichen in eine horizontale Ebene verbrachte Rückenlehnenteil 14 nun das Liegebehältnis 15 aufgestellt werden kann. Der vordere Abschnitt greift dabei auf die Sitzkante 30 auf. Bei entsprechender Breitenanpassung ist bereits ein relativ guter Halt durch Klemmwirkung gegeben. Um aber ein Verrutschen des Behältnisses 15 zu vermeiden, sind erfindungsgemäß zusätzlich an den Seitenwänden 16 und 17 des Liegebehältnisses 15 Befestigungsmittel 18, 19 in Form von Bändern vorgesehen, die um die Seitenholme 2 und 3 gelegt und verknotet werden, so daß das Behältnis gesichert in diesem Schiebewagen befestigt ist. Nach dem Herausnehmen des Liegebehältnisses 15 kann auf einfache Weise durch Lösen des Abhängers und durch Hochziehen des Rückenteils 14 und des Verbindens seiner Abhänger 25 mit den Schrägholmen 2 und 3 eine gewünschte Schrägstellung der Rückenlehne wieder erreicht werden. Das Lordosestützteil 20, das hier vorgesehen ist, hat darüber hinaus den Vorteil, daß das Rückenlehnenteil 14 in eine horizontale Ebene verbringbar ist und keine offene Schräge entsteht, die dann gegeben wäre, wenn die hintere Kante des Sitzteils 13 zugleich die Faltkante für die Rückenlehne 14 bilden würde.

In dem Ausführungsbeispiel in Fig. 2 ist vereinfacht eine andere Befestigungsmöglichkeit des Behältnisses 15 an den Schrägholmen 2 und 3 dargestellt. Das Behältnis weist Versteifungselemente 26 und 27 auf, die beispielsweise aus Kunststoff bestehen. In diesen Versteifungselementen sind Lagerungsöffnungen, z.B. Rastlagerungsöffnungen, vorgesehen, in die Verbindungsgegenelemente, beispielsweise Bolzen 28 und 29, rastend eingreifen. Entsprechend der Schrägstellung des Holms 2 bzw. 3 befindet sich die eine Verbindung am Fußpunkt des Versteifungselementes 26 und an dem anderen Versteifungselement 27 im oberen Randbereich des Behältnisses 15.

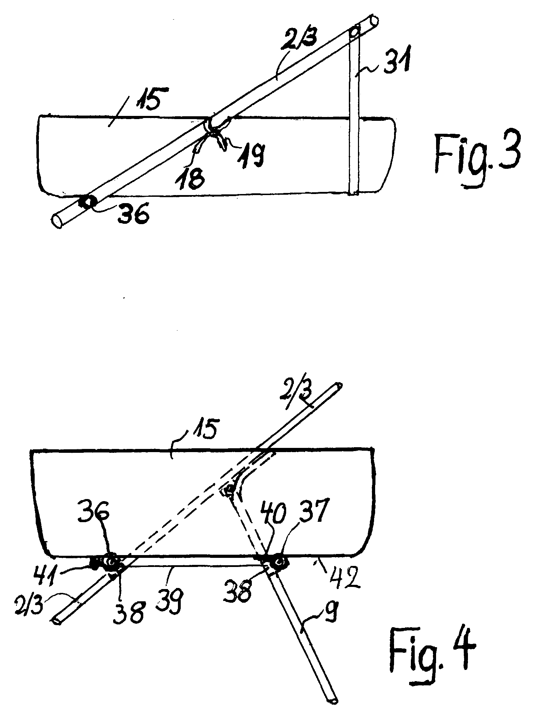

Eine weitere einfachere Ausführung ist in Fig. 3 dargestellt. Das Liegebehältnis 15 ist auf einen Querholm 36 aufgesetzt, der beispielsweise auch durch die Sitzkante 30 des Sitzteils 13 in Fig. 1 gebildet ist. Im hinteren Bereich ist ein Flachband 31 als Abhänger vorgesehen, der unter dem hinteren Teil des Liegebehältnisses 15 hindurchgeführt und beidseitig an den beiden Schrägholmen 2 und 3 befestigt ist. Um eine gesicherte Befestigung zu gewährleistet, sind in diesem Fall die beiden Befestigungsmittel 18 und 19 um die Schrägholme 2 und 3 gelegt und verknotet.

Ein weiteres Ausführungsbeispiel ist in Figur 4 dargestellt. In dieser Figur ist das Liegebehältnis 15 an zwei Querstreben 36, 37 befestigt, welche Querstreben mittels Aufrastelemente 38 auf die Schrägholme 2 und 3 und auf die Stützstreben 9 geklippt sind. Ein unterhalb des Aufrastelementes 38 an dem Schrägholm 2 bzw. 3 vorgesehener Druckknopfkörper verhindert ein Verrutschen des selbstklemmenden Aufrastelementes 38, das aus Kunststoff besteht, bei Stoßbelastung. Das eingezeichnete Verbindungsband 39, das ein flexibles Kopplungselement ist, verhindert ein Abrutschen des hinteren Querholms 37, der mit der gleichen Befestigungstechnologie an den Stützstreben 9 befestigt ist, so daß auf die fixierten Querstreben 36, 37 das Liegebehältnis 15 aufgesetzt werden kann. Eine Klemmschelle als Befestigungseinrichtung 40 wird dabei auf den hinteren Querholm 37 aufgeschoben, während eine Schraubschelle als Bestandteil der Befestigungseinrichtung 40 an den Boden 42 festgeschraubt ist und den vorderen Querholm 36 übergreift, so daß nur durch Lösen der Schraube, die die Schelle festhält, das Liegebehältnis 15 abgenommen werden kann. Danach ist ein einfaches Entfernen der aufgeklippten Querholme 36, 37 möglich und der Schiebewagen kann für seinen eigentlichen Zweck, nämlich als Kinder- bzw. Puppensportwagen, genutzt werden.

Verwendbare Aufrastelemente mit selbstklemmenden Seitenschenkeln, an denen die Querholme befestigt sind, sind aus der DE 298 22 182 U1 des Anmelders bekannt. Solche Aufrastelemente können auch hier als Befestigungselemente eingesetzt werden.

Die Erfindung ist nicht nur auf die dargestellten Ausführungsbeispiele beschränkt. Es können sämtliche Verbindungsarten und Befestigungsvorrichtungen bekannter Art zur Anwendung kommen, um eine gesicherte Befestigung des Liegebehältnisses 15 zwischen den beiden benachbarten Schrägholmen 2 und 3 zu gewährleisten. Z. B. können auch vorhandene Gurte an der Rückenlehne oder dem Sitzteil des Sitzelementes für die Fixierung mit verwendet werden. Hierzu sind entsprechende Schloßverbinder oder Gurtführungen an dem Liegeeinsatz vorzusehen.

Weiterhin kann alternativ zu dem in der Figur 4 gezeigten Ausführungsbeispiel auf das flexible Kopplungselement 39 verzichtet werden, wenn an den Stützstreben 9 ebenfalls jeweils ein Anschlagelement vorgesehen ist, welches ein Abrutschen des Querholms 37 nach unten verhindert.

### Bezugszeichenliste

- 1: Wagengestell
- 2: Schrägholm
- 3: Schrägholm
- 4: Schiebebügel
- 5: Gabel
- 6: Verlängerung
- 7: Verlängerung
- 8: Vorderrad
- 9: Stützstrebe
- 10: Lagervorrichtung
- 11: hinteres Rad
- 12: Sitzelement
- 13: Sitzteil
- 14: Rückenlehnenteil
- 15: Behältnis
- 16: Seitenwand
- 17: Seitenwand
- 18: Befestigungsmittel
- 19: Befestigungsmittel
- 20: Lordosestützteil
- 21: Verlängerung
- 22: Querstrebe
- 23: Ahnäher
- 24: Wände
- 25: seitlicher Abhänger
- 26: Versteifungselement
- 27: Versteifungselement
- 28: Verbindungselement
- 29: Verbindungselement
- 30: Sitzkante
- 31: Flachband
- 32: Bespannung
- 33: Fußraste
- 34: Druckknopf
- 35: Öse
- 36: Querholm
- 37: Querholm
- 38: Aufrastelement
- 39: flexibles Kopplungselement
- 40: Befestigungseinrichtung
- 41: Befestigungseinrichtung
- 42: Boden

## Patentansprüche

1. Dreirädriger Schiebewagen für Kinder und/oder Puppen mit einem Wagengestell (1), aufweisend
mindestens zwei im wesentlichen parallel von vorn nach hinten ansteigend verlaufende, durchgehende oder aus miteinander verbundenen Abschnitten gebildete Schrägholme (2, 3), die an ihren oberen Enden Schiebegriffe oder einen Schiebebügel (4) und an ihren unteren Enden Verlängerungen (6, 7) aufweisen, die aufeinander zulaufend in eine Gabel für die Befestigung eines Vorderrades (8) übergehen oder an einer solchen befestigt sind, und
Stützstreben (9) mit Lagervorrichtungen (10) für die beiden hinteren seitlichen Räder (11), welche Stützstreben (9) im mittigen Bereich oder oberhalb der Mitte der Länge der Schrägholme und Gabel an den Schrägholmen befestigt oder verschwenkbar befestigt sind und mit den Schrägholmen ein Dreieck bilden,
wobei zwischen den Schrägholmen (2, 3) ein Sitzelement (12) vorgesehen ist, das mindestens einen Sitzteil (13) und einen Rückenlehnenteil (14) aufweist, die an den Schrägholmen (2, 3) befestigt sind,
**dadurch gekennzeichnet,** daß in dem Wagengestell (1) Befestigungseinrichtungen für die Fixierung und/oder Lagerelemente zum Aufsetzen eines Liegebehältnisses (15) für Kleinkinder, insbesondere Kinderwageneinsatz oder Babytragetasche, mit versteiften Seitenwänden (16, 17) vorgesehen sind, und daß das Liegebehältnis (15) Befestigungsmittel (18, 19) zum Fixieren desselben an den Befestigungseinrichtungen und/oder an den Schrägholmen (2, 3) aufweist.

2. Schiebewagen nach Anspruch 1, **dadurch gekennzeichnet,** daß das Rückenlehnenteil (14) lösbar an den Schrägholmen (2, 3) befestigt ist und vor dem Einsetzen des Liegebehältnisses (15) gegenüber dem Sitzteil (13) oder einem zwischengefügten Lordosenstützteil (20) nach unten in eine im wesentlichen parallele Ebene zum Aufstellungsboden der Räder (8, 11) abklappbar ist, und daß Vorrichtungen vorgesehen sind, die den Rückenlehnenteil (14) an den Schrägholmen (2, 3) in der abgeklappten Position halten, daß auf das Rückenlehnenteil (14) mindestens ein Teilabschnitt des Liegebehältnisses (15) aufsetzbar ist und daß an den Schrägholmen (2, 3) oder dem Liegebehältnis Befestigungseinrichtungen oder Befestigungsmittel (18, 19) zur Fixierung des Liegebehältnisses (15) an den Schrägholmen (2, 3) vorgesehen sind.

3. Schiebewagen nach Anspruch 2, **dadurch gekennzeichnet,** daß an dem Rückenlehnenteil (14) Abhänger mindestens in Form einer Verlängerung (21) aus flexiblem Material, insbesondere eine textile Stoffbahn, Folie oder Bänder, vorgesehen sind, die beim Abklappen des Rückenlehnenteils (14) an den Schrägholmen (2, 3) im Bereich der oberen Enden oder an einer zwischen den Schrägholmen (2, 3) eingefügten Querstrebe (22) befestigt sind.

4. Schiebewagen nach Anspruch 2, **dadurch gekennzeichnet,** daß an den Schrägholmen (2, 3) im Bereich der oberen Enden oder an einer zwischen den Schrägholmen (2, 3) im Bereich ihrer oberen Enden zwischengefügten Querstrebe (22) flexible oder feste Abhänger befestigt sind, die den Rückenlehnenteil (14) im abgeklappten Zustand mit einem abgewinkelten Ansatz, z.B. einem Auflegeschenkel oder einem durch Abnähung angebrachten Abschnitt (23), untergreifen und/oder hieran befestigt sind.

5. Schiebewagen nach Anspruch 4, **dadurch gekennzeichnet,** daß der Abhänger ein textiles oder ein folienförmiges Flächengebilde ist, das eine Verlängerung (21) und seitlich Wände, die vorzugsweise aus gleichem Material bestehen, aufweist, die die dreieckförmigen Öffnungen zwischen dem abgesenkten Rückenlehnenteil (14) und den Schrägholmen (2, 3) abdecken.

6. Schiebewagen nach Anspruch 5, **dadurch gekennzeichnet,** daß seitliche Abhänger (25) des Rückenlehnenteils (14) an den seitlichen Wänden (24) befestigt sind.

7. Schiebewagen nach Anspruch 1 oder 2**,dadurch gekennzeichnet,** daß an dem Liegebehältnis (15) als Befestigungsmittel (18, 19) Bänder angebracht sind, die um die Schrägholme (2, 3) im eingesetzten Zustand des Behältnisses (15) legbar und verknotbar sind.

8. Schiebewagen nach einem oder mehreren der vorhergehenden Ansprüche**,dadurch gekennzeichnet,** daß die Befestigung der Abhänger und/oder mindestens des Rückenlehnenteils (14) und/oder dessen Abhänger (25) oder der des Sitzelementes (13) an den Schrägholmen mittels Druckknöpfen erfolgt.

9. Schiebewagen nach einem oder mehreren der vorhergehenden Ansprüche, **dadurch gekennzeichnet,** daß das Sitzelement aus einem textilen, wattierten, versteiften oder hohe Eigensteifigkeit aufweisenden Material besteht, und daß das Rückenlehnenteil (14) aus gleichem Material besteht, und daß seitliche textile oder folienförmige Flächenelemente hiermit verbunden sind, die der Form entsprechend zugeschnitten und an den Schrägholmen (2, 3) befestigbar sind.

10. Schiebewagen nach Anspruch 1 oder 2, **dadurch gekennzeichnet,** daß das Liegebehältnis (15) an den Seitenwänden (16, 17) oder den in diesen eingesetzten Versteifungselementen (26, 27) Verbindungselemente für die Befestigung mit korrespondierenden Verbindungselementen (28, 29) an den Schrägholmen (2, 3) aufweist, wobei die Verbindungselemente unter Berücksichtigung der Schrägstellung der Schrägholme (2, 3) höhenversetzt vorgesehen sind.

11. Schiebewagen nach Anspruch 10, **dadurch gekennzeichnet,** daß das Liegebehältnis (15) an den Seitenwänden oder an den in diesen eingesetzten Versteifungselementen Verbindungselemente in Form von Ausnehmungen oder vorstehende Lagerzapfen aufweist, die in Aufnahmen an den Schrägholmen einrastbar sind, oder daß an den Schrägholmen vorstehende Bolzen vorgesehen sind, die in die Aufnahmen der Seitenwände oder Versteifungselemente einrasten.

12. Schiebewagen nach einem oder mehreren der vorhergehenden Ansprüche, **dadurch gekennzeichnet,** daß nach Entfernen oder Absenken mindestens des Rückenlehnenteils (14) das Liegebehältnis (15) auf der vorderen Sitzkante (30) des Sitzteils (13) oder auf einer in diesem Bereich vorgesehenen Strebe oder einem vorstehenden Bolzen aufliegt und der hintere Teil von den Abhängern gehalten ist.

13. Schiebewagen nach Anspruch 3 oder 12, **dadurch gekennzeichnet,** daß die Abhänger aus einem flexiblen Flachbandmaterial (31) oder einem festen Brückenelement bestehen, das unter das Liegebehältnis (15) am einen Ende schwenkbar und an den Schrägholmen (2, 3) befestigt ist.

14. Schiebewagen nach einem oder mehreren der Ansprüche 1 bis 10, **dadurch gekennzeichnet,** daß nach Entfernen des Sitzteils (13) in dem konisch verlaufenden Übergangsteil mit den Verlängerungen (6, 7) das Liegebehältnis (15) am Kopf- oder Fußende eingeklemmt oder gegen Vorschieben gesichert und von den Abhängern am anderen Ende gehalten ist oder auf einem Querholm im Wagengestell (1) aufliegt.

15. Schiebewagen nach einem der vorhergehenden Ansprüche, **dadurch gekennzeichnet,** daß am Sitzelement vorhandene Gurte zur Sicherung eines Kindes in dem Sitz für die Befestigung eines Liegebehältnisses dienen und mit am Liegebehältnis vorgesehenen Schloßsystemen gekoppelt oder durch Halterungen gezogen und dann durch Verbinden mit den vorhandenen Gurtschlössern gesichert sind.

16. Schiebewagen nach einem der vorhergehenden Ansprüche, **dadurch gekennzeichnet,** daß das Liegebehältnis (15) ein in einen Schlafsack umwandelbares Behältnis ist und als wärmender Schlafsackeinsatz nach Entfernen der Bodenversteifungsplatte und der Wandversteifungen in das Sitzelement (12) einsetzbar ist.

17. Schiebewagen nach Anspruch 1, **dadurch gekennzeichnet,** daß die Lagerelemente Querholme (36, 37) sind, die an den beiden Schrägholmen (2, 3) und an den beiden Stützstreben (9) in einen bestimmten Abstand zum Aufstellboden und auf gleicher Ebene befestigt sind, wobei mindestens der Rückenlehnenteil (14) des Sitzelementes (12) heruntergeklappt oder entfernt ist und das Liegebehältnis (15) mindestens mittels an der Unterseite des Bodens (42) vorgesehener Befestigungseinrichtungen (40, 41) an den Querholmen (36, 37) befestigt ist.

18. Schiebewagen nach Anspruch 17, **dadurch gekennzeichnet,** daß die Querholme (36, 37) lösbar an den beiden Schrägbolmen (2, 3) und an den beiden Stützstreben (9) befestigt sind.

19. Schiebewagen nach Anspruch 17 oder 18, **dadurch gekennzeichnet,** daß die Querholme oberhalb der Verlängerungen (6, 7) der Schrägholme (2, 3) angeordnet sind.

20. Schiebewagen nach einem der Ansprüche 17 bis 19, **dadurch gekennzeichnet,** daß die Querholme (36, 37) an lösbar auf die Schrägholme (2, 3) bzw. die Stützstreben (9) aufdrückbaren Aufrastelementen (38) befestigt sind oder mittels Schrauben zwischen den Schrägholmen bzw. den Stützstreben befestigt sind.

21. Schiebewagen nach Anspruch 20, **dadurch gekennzeichnet,** daß die Aufrastelemente (38) federnde Seitenschenkel aufweisen, deren lichte Weite dem Rohdurchmesser bzw. dem Breitenmaß des Rohrprofils der Schrägholme (2, 3) bzw. der Stützstreben (9) angepaßt ist, derart, daß sie unter Eigenfederdruck anliegen, wobei die vorderen Schenkelenden, die die Öffnung zum Aufdrücken auf die Holme bzw. Streben ermöglichen, nach innen ausgeformt vorgesehen sind, um mindestens einen hinteren Teilabschnitt des Holmes bzw. der Querstrebe im aufgerasteten Zustand zu hintergreifen.

22. Schiebewagen nach Anspruch 20 oder 21, **dadurch gekennzeichnet,** daß das Aufrastelement (38) aus Kunststoff besteht.

23. Schiebewagen nach einem der Ansprüche 17 bis 22, **dadurch gekennzeichnet,** daß die Querholme (36, 37) an den Außenseiten der Schrägholme (2, 3) bzw. der Stützstreben (9) diese miteinander verbindend vorgesehen sind.

24. Schiebewagen nach Anspruch 23 in Verbindung mit den Ansprüchen 18 bis 22, **dadurch gekennzeichnet,** daß die Querholme (36, 37) über Kopplungselemente (39), wie Bänder oder Ketten, in Längsrichtung des Wagengestells miteinander verbunden sind oder daß zur Vermeidung des Abrutschens des Querholms (37) jeweils ein Anschlagelement an den Stützelementen (9) vorgesehen ist.

25. Schiebewagen nach einem der Ansprüche 17 bis 24, **dadurch gekennzeichnet,** daß der Querholm (36) zwischen den Schrägholmen (2, 3) ein vorhandener Querholm ist, der die Sitzkante (30) des als Sportwagen nutzbaren Schiebewagens bildet, während der Querholm (37) zwischen bzw. an den Stützstreben (9) auf gleicher Höhe lösbar an diesen angebracht ist.

26. Schiebewagen nach einem der Ansprüche 1 bis 9, 17 oder 25, **dadurch gekennzeichnet,** daß an dem Querholm (36) oder an den Schrägholmen (2, 3) eine aufstellbare Fußraste (33) vorgesehen ist, die an einem Rahmen oder an einem eine Wadenstütze bildenden Flächenelement im wesentlichen senkrecht befestigt ist, der bzw. das am Querholm (36) oder den Schrägholmen (2, 3) angelenkt ist, wobei der Rahmen oder das Flächenelement mit der oberen Kante oder im aufgestellten horizontalen Zustand eine Lagerfläche für das Liegebehältnis (15) bildet.

27. Schiebewagen nach Anspruch 26, **dadurch gekennzeichnet,** daß die Fixierung des Liegebehältnisses (15) nur am hinteren Querholm (37) vorgesehen ist.

28. Schiebewagen nach einem der Ansprüche 17 bis 27, **dadurch gekennzeichnet,** daß die Querholme (36, 37) mindestens an einer Seite durch einsetzbare Verlängerungen mit den Querholmen (36, 37) eines benachbarten Schiebewagens zur Bildung eines Zwillings- oder Drillings-Schiebewagens verbindbar sind.

29. Schiebewagen nach einem der Ansprüche 17 bis 28**,dadurch gekennzeichnet,** daß die Befestigungseinrichtungen (40, 41) Klemm- oder Aufrastmittel oder schellenförmige anschraubbare Befestigungsmittel umfassen, die an der Unterseite des Behältnisses (15) an dessen Boden (42) einerseits befestigt und andererseits die Querholme mindestens teilweise übergreifen.

30. Schiebewagen nach einem der Ansprüche 17 bis 29, **dadurch gekennzeichnet,** daß eine Befestigungseinrichtung als Aufschubklemmeinrichtung mit einer Öffnung in Aufschubrichtung des Behältnisses (15) vorgesehen ist und die zweite Befestigungseinrichtung (40) eine Überwurfschelle aufweist, die an dem Boden (42) angeschraubt ist.

31. Schiebewagen nach Anspruch 29 oder 30, **dadurch gekennzeichnet,** daß die Befestigungsmittel der Befestigungseinrichtung (40, 41) aus Kunststoff bestehen.
